# EUROPEAN PATENT APPLICATION

(11) **EP 1 909 210 A1**
(43) Date of publication of application: **09.04.2008**
(21) Application number: 07105926.5
(22) Date of filing: 11.04.2007
(51) Int. Cl.: G06F 21/00

(54) **Contents Decryption Method Using DRM Card**

(30) Priority: 04.09.2006 KR 20060084828
(71) Applicant: SAMSUNG ELECTRONICS CO., LTD., Suwon-si, Gyeonggi-do (KR)
(72) Inventor: Lee, Choon-hoon, Seoul (KR); Ju, Hak-soo, Gyeonggi-do (KR); Kim, Chi-hurn, Gyeonggi-do (KR)
(74) Representative: Clark, David James

(57) **Abstract**

Provided is a contents decoding method using a digital rights management (DRM) card (100). The method of decoding contents received from a host device (200) connected with a DRM card (100) storing DRM software includes: receiving encrypted contents information from the host device (200) and granting a contents decoding request; executing the DRM software corresponding to the contents information and decoding the received contents; and transmitting the decrypted contents to the host device (200), thereby using various pieces of contents regardless of a DRM system set in contents and easily upgrading DRM software to defend against hacking. Further, a host device (200) does not require DRM software, which facilitates mass production and reduces manufacturing costs.

## Description

The present invention relates to a content usage using digital rights management (DRM), and more particularly to content decryption methods using a portable DRM card.

Digital content is conveniently produced and processed because of the popularity of the Internet, and development of communication technology. However, unlike analog data, since digital contents can be losslessly copied, reused, and easily processed and distributed, they are often illegally copied.

In particular, the amount of illegal circulation of digital content has increased due to the availability of networks, devices, and the way they provide contents and services. Contents have been circulated through PC's via the Internet. However, contents are also circulated using home devices or mobile devices using digital broadcasting and home networking.

Therefore, to protect contents and contents producers from illegal copying, research into digital rights management (DRM) systems has been actively conducted, and many services using DRM have been introduced. However, services using DRM are limited due to incompatibility between different DRM systems.

In particular, it is not difficult to process various contents formats in a relatively free environment for software such as PCs, whereas it is not easy to change the contents format in consumer electronic (CE) devices such as digital TVs, DVD players, personal media player (PMPs), etc.

Conventional DRM systems can not be changed or upgraded because they are built into devices that use contents. Devices having a specific DRM are limited to using contents of that DRM. Also, the user can use contents only using the specific device and thus availability of the contents to the user is limited.

It is an aim of preferred embodiments of the present invention to address at least one disadvantage of the prior art, whether identified herein, or otherwise.

The present invention provides a portable digital rights management (DRM) card that is not built in a device and is easy to install DRM software.

According to an aspect of the present invention, there is provided a digital rights management (DRM) card comprising: a channel interface communicating with a host device; a controller controlling digital rights management (DRM) software and constituents; a software storage unit storing the DRM software; and a processor executing DRM software to decrypt the encrypted contents received from the host device.

The DRM card may further comprise: a virtual machine, wherein, if the DRM software is prepared as an operation code of the virtual machine, the DRM software is executed through the virtual machine.

The DRM card may further comprise: a license storage unit storing license information on the encrypted contents received from the host device.

The DRM card may further comprise: an hardware encryption/decryption unit performing basic encryption/decryption algorithms, which the DRM software uses to decrypt the encrypted contents using contents key.

Suitably, a contents key of the encrypted contents is decrypted by encryption/decryption unit using a stored card key.

According to another aspect of the present invention, there is provided a host device comprising: a controller managing overall operation with a connected DRM card, requesting the DRM card to decrypt encrypted contents, and requesting the installation of the DRM software; and a channel interface communicating with the DRM card.

According to another aspect of the present invention, there is provided a method of decrypting contents using the host device and the DRM card, the method comprising: the host device sending the encrypted contents information to the connected DRM card and requesting decryption of the encrypted content; the DRM card executing the DRM software corresponding to the contents information and granting a contents decryption request to the host device; host device transmitting the encrypted contents; the DRM card decrypting the received contents; and transmitting the decrypted contents to the host device.

According to another aspect of the present invention, there is provided a contents decryption system comprising: a DRM card storing DRM software, executing DRM software corresponding to a request for decrypting received encrypted contents, and decrypting the received encrypted contents; and a host device connected to the DRM card, requesting the DRM card to decrypt the encrypted contents, transmitting the encrypted contents, and receiving decrypted contents from the DRM card.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates a contents reproduction process performed by a host device combined with a digital rights management (DRM) card according to an exemplary embodiment of the present invention;
FIG. 2 is a block diagram of the DRM card according to an exemplary embodiment of the present invention;
FIG. 3 is a block diagram of a host device according to an exemplary embodiment of the present invention;
FIG. 4 illustrates a process of requesting the DRM card combined with the host device to decrypt contents and receiving the decrypted contents from the DRM card according to an exemplary embodiment of the present invention; and
FIG. 5 is a flowchart of a process of installing DRM software performed by the DRM card.

The present invention will now be described more fully with reference to the accompanying drawings, in which exemplary embodiments of the invention are shown.

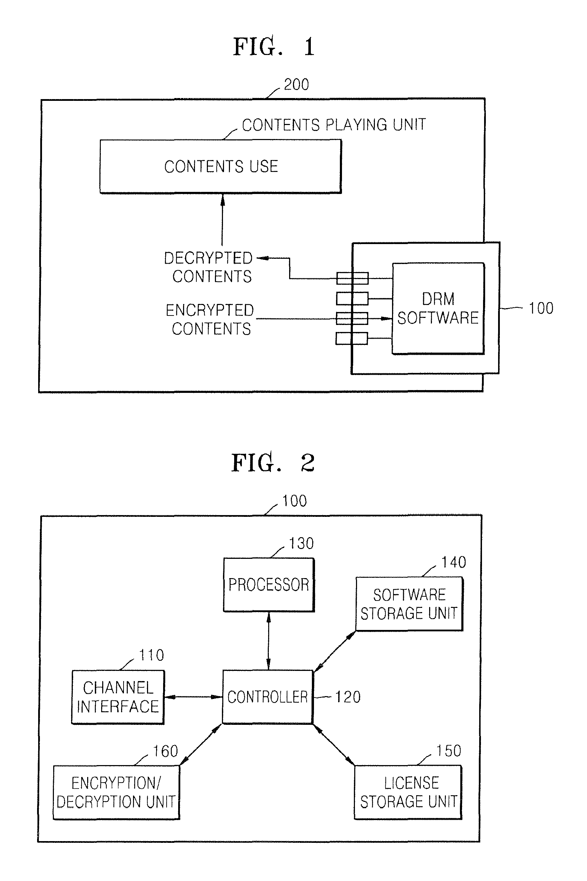

FIG. 1 illustrates a contents usage (playing) process performed by a host device 200 combined with a digital rights management (DRM) card 100 according to an exemplary embodiment of the present invention. Referring to FIG. 1, when the host device 200 is to play DRM-encrypted contents, the encrypted contents are delivered to the DRM card 100, the DRM software in the DRM card 100 decrypts the encrypted contents using license information so that the host device 200 can use the decrypted contents. The host device 200 that receives the decrypted contents can play the received contents. A variety of DRM modules can be installed in the DRM card 100 in the form of software as illustrated in FIG. 1. The host device 200 is not subject to a specific DRM but receives various types of content through the DRM card 100 according to the DRM modules installed in the DRM card 100.

FIG. 2 is a block diagram of the DRM card 100 according to an exemplary embodiment of the present invention. Referring to FIG. 2, the DRM card 100 comprises a channel interface 110, a controller 120, a processor 130, a software storage unit 140, a license storage unit 150, and an encryption/decryption unit 160.

The channel interface 110 is physical interface through which contents and various kinds of data are transmitted and received to/from the host device 200.

The controller 120 manages DRM software modules stored in the software storage unit 140, manages license storage unit 150 where each DRM software module in the DRM card reads and writes licenses containing usage rules for contents, and controls authentication and communication with the host device 200.

The processor 130 executes DRM software. When the DRM software is prepared as an operation code of a virtual machine, DRM software is executed through the virtual machine (not shown in the Figures).

The software storage unit 140 stores a plurality of DRM software modules.

The license storage unit 150 stores license information on content transmitted from the host device 200.

The encryption/decryption unit 160 performs basic cryptographic algorithms (e.g., AES, DES, RSA, etc.) and is used by the DRM software to decrypt the contents The encryption/decryption unit 160 is also used to re-encrypt decrypted contents using a session key shared with the host device so that only the host device 200 can decrypt the re-encrypted contents. The encryption/decryption unit 160 can be also used to decrypt a contents key using a secret card key.

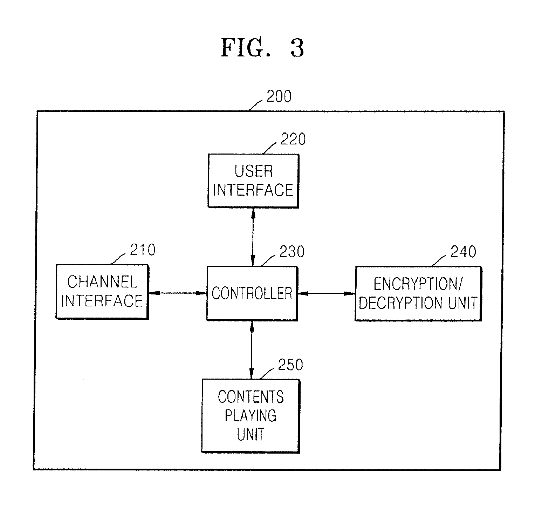

FIG. 3 is a block diagram of the host device 200 according to an exemplary embodiment of the present invention. Referring to FIG. 3, the host device 200 includes a channel interface 210, a user interface 220, a controller 230, an encryption/decryption unit 240, and a contents playing unit 250.

The channel interface 210 is a physical interface through which contents and various kinds of data are transmitted and received to/from DRM card 100.

The user interface 220 receives a user's input during a DRM related process of contents and/or informs a user of a processed result. For example, when the license for the contents is issued, the user interface 220 provides the user with a means inputting necessary information and delivers its result to the user.

The controller 230 manages communication of contents, requests contents decryption to the DRM card, transmits DRM software to the DRM card, and performs a general control operation of the host device 200.

The encryption/decryption unit 240 performs a basic cryptographic algorithm, decrypts re-encrypted contents when it receives the re-encrypted contents from the DRM card 100.

The contents playing unit 250 plays contents decrypted by the DRM card 100 .

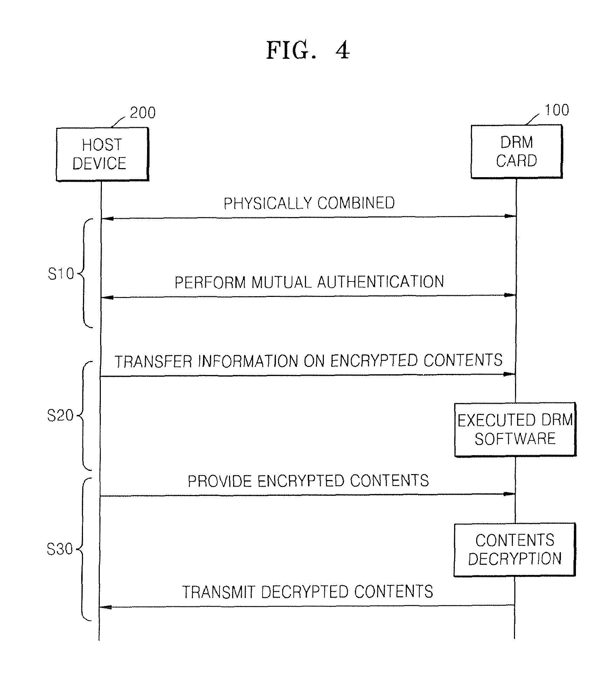

FIG. 4 illustrates a process of requesting the DRM card 100 connected with the host device 200 to decrypt contents and receiving the decrypted contents from the DRM card 100 according to an exemplary embodiment of the present invention. Referring to FIG. 4, a mutual authentication is performed between the DRM card 100 and the host device 200 (Operation S 10). In Operation S10, the DRM card 100 and the host device 200, which are physically combined with each other, authenticate each other, and generate and share a session key.

The "physically combined" does not necessarily indicate that the DRM card 100 is inserted into the host device 200, but can mean both are electrically connected to each other.

After the mutual authentication is performed, the contents decryption request is made (Operation S20). In detail, the host device 200 transmits information on content to be decrypted to the DRM card 100. The controller 120 of the DRM card 100 analyzes the contents' information, searches DRM software that can decrypt the contents in the software storage unit 140, and executes the DRM software.

When the DRM software is prepared as an operation code of the processor 130, the processor 130 directly executes the DRM software. If not, the DRM software can be performed in a virtual machine. The DRM software reads the license for the content from the license storage 150 to check if the content can be used. After the DRM software is started, the DRM card 100 transmits a grant message for the contents decryption request to the host device 200.

A contents decryption process is performed (Operation S30). The host device 200 transmits encrypted contents to the DRM card 100. The DRM software executed in the DRM card 100 receives the encrypted contents, decrypts the received contents , and retransmits the decrypted contents.

When the encrypted contents are decrypted through the DRM software installed in the DRM card 100, a contents key used to decrypt the encrypted contents is included in the license or is received from the host device 200. If the contents key is included in the license, then the license is analyzed to extract the contents key.

Generally, the contents key is encrypted using the card key (public or secret key) of the DRM card 100, and decrypted as the key (private or secret key) of the DRM card 100. The key of the DRM card 100 can be accessed not by the DRM software, but by the encryption/decryption unit 160. Therefore, the DRM software requests the encryption/decryption unit 160 to decrypt the encrypted contents key. The encryption/decryption unit 160 decrypts the encrypted contents key using the device key of the DRM card 100 and delivers the decrypted contents key to the DRM software.

The DRM software decrypts the encrypted contents using the encryption/decryption unit 160 using the decrypted contents key. If the DRM software includes an encryption/decryption algorithm, the DRM software can decrypt the encrypted contents without the encryption/decryption unit 160.

When the decrypted contents are re-transmitted to the host device 200, the decrypted contents may be re-encrypted using the session key generated in Operation S10 for security.

During the decryption process, if the license for the contents is not available in the DRM card, the DRM software requests the host device 200 for the license. The host device 200 obtains the license from a network. The obtained license is transferred to the DRM card 100. The DRM card 100 stores the received license in the license storage unit 150 and informs the host device of its result. The host device 200 transfers a license issuance result to a user through the user interface 220.

In Operation S20, if the DRM software that decrypts content is not installed in the DRM card 100 or the user requests installation of the DRM software through the user interface 220, the DRM software is installed in the DRM card 100.

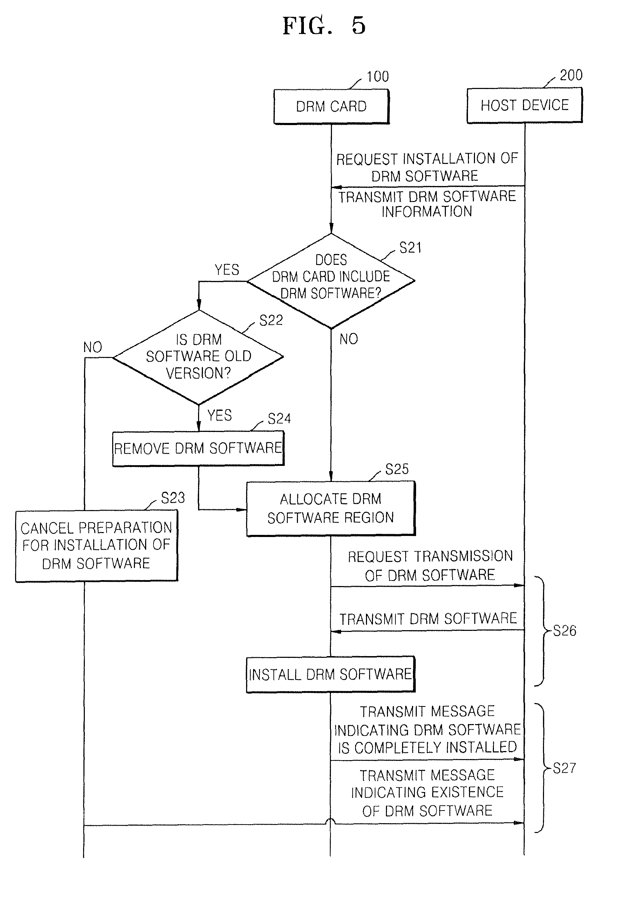

FIG. 5 is a flowchart of a process of installing DRM software performed by the DRM card 100. Referring to FIG. 5, the host device 200 downloads the DRM software from a network or optical media, and transmits information on the downloaded DRM software along with a message requesting the installation of the DRM software to the DRM card 100.

The controller 120 of the DRM card 100 determines whether the DRM software requested by the host device 200 already exists in the DRM storage unit 140 (Operation S21).

If it is determined that the software storage unit 140 includes the DRM software, the controller 120 determines whether the DRM software is an old version (Operation S22). If it is determined that the DRM software is already a new version, the installation is cancelled, and a message indicating the existence of the DRM software is transmitted to the host device (Operation S23).

If it is determined that the DRM software is an old version, the controller 120 removes the DRM software from the software storage unit 140 (Operation S24) and return a memory region allocated in the software storage unit 140 and allocates a region where new version of DRM software will be installed (Operation S25).

If the region is allocated to the software storage unit 140, the DRM card 100 requests the host device 200 to transmit the DRM software.

The host device 200 transmits the DRM software to the DRM card 100. The DRM card 100 that receives the DRM software from the host device 200 stores the DRM software in the region allocated in the software storage unit 140. Information on the DRM software is stored in the software storage unit 140 (Operation S26).

If the DRM card 100 transmits a message indicating that the DRM software is completely installed to the host device 200, the host device 200 may notify the DRM software installation result to a user through the user interface 220 (Operation S27).

According to the present invention, various pieces of DRM software are installed in the DRM card 100 according to content so that a user can use the contents regardless of a DRM system. A contents provider can also freely select various DRM systems and easily upgrade DRM systems. A host device producer can produce the host device 200 without restriction to DRM systems. The host device 200 does not need to include DRM software, so that manufacturing costs for the host device 200 can be reduced.

The present invention can also be implemented as computer-readable code on a computer-readable recording medium. The computer-readable recording medium is any data storage device that can store data which can then be read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet).

As described above, a contents decryption method using a portable DRM card installs various DRM software in a DRM card, thereby using various pieces of contents regardless of a DRM system set in contents and easily upgrading DRM software to defend against hacking. Furthermore, a host device does not require built-in DRM system, which reduces manufacturing costs.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A DRM card comprising:
a channel interface (110) connectable to a host device (200), the channel interface (110) operable to receive encrypted contents from the host device (200) and transmit decrypted contents;
a controller (120) which is operable to perform a mutual authentication with the host device (200) and control digital rights management (DRM) software and constituents;
a software storage unit (140) arranged to store the DRM software; and
a processor (130) which is operable to execute DRM software corresponding to a contents decryption request of the host device (200) and to decrypt the encrypted contents received from the host device.

2. The DRM card of claim 1, wherein, if the software storage unit (140) stores the DRM software corresponding to the contents decryption request of the host device (200), the DRM software is executed using the processor (130).

3. The DRM card of claim 2, wherein, if the DRM software is an old version, the DRM software is removed and the host device (200) is requested to transmit a new version of DRM software.

4. The DRM card of claim 1, wherein, if the software storage unit (140) does not store the DRM software corresponding to the contents decryption request of the host device, the host device (200) is requested to transmit the DRM software.

5. The DRM card of claim 4, wherein, when the DRM software is received from the host device (200) in response to the request for the transmission of the DRM software, the DRM software is stored in the software storage unit (140).

6. The DRM card of any preceding claim, further comprising: a virtual machine,
wherein, if the DRM software is prepared as an operation code of the virtual machine, the DRM software is executed through the virtual machine.

7. The DRM card of any preceding claim, further comprising: a license storage unit (150) which stores license information on the encrypted contents received from the host device (200).

8. The DRM card of any preceding claim, further comprising: an encryption/decryption unit (160) which performs a cryptographic algorithm that is used by DRM software to decrypt the content.

9. The DRM card of claim 8, wherein a contents key of the encrypted contents is decrypted using a stored card key.

10. A host device comprising:
a controller (230) operable to manage operation of the host device with a connected DRM card (100) at least by performing a mutual authentication with the DRM card (100), requesting the DRM card to decrypt encrypted contents, and requesting the installation of DRM software; and
a channel interface (210) arranged to communicate with the DRM card.

11. The host device of claim 10, further comprising, when re-encrypted contents are received from the DRM card (100), an encryption/decryption unit (240) which decrypts the re-encrypted contents.

12. The host device of claim 10 or 11, further comprising: a contents playing unit (250) which plays the decrypted contents.

13. The host device of claim 11 or 12, wherein when information is received from the DRM card (100) that DRM software capable of decrypting the encrypted contents is not stored in the DRM card, externally downloaded DRM software is transmitted to the DRM card (100).

14. The host device of claim 10, 11, 12 or 13, further comprising: a user interface (220) which receives a user's input or displays result information for a user when the DRM software is installed in the DRM card (100) or a license is obtained.

15. A method of decrypting contents received from a host device (200) using a DRM card (100) storing DRM software, the method comprising:
the DRM card (100) receiving encrypted contents information from the host device (200) and granting a contents decryption request;
the DRM card (100) executing the DRM software corresponding to the contents information and decrypting the received contents; and
the DRM card (100) transmitting the decrypted contents to the host device (200).

16. The method of claim 15, wherein, if the DRM software corresponding to the contents decryption request of the host device is stored, the DRM software is executed.

17. The method of claim 15 or 16, wherein, if the DRM software is an old version, the DRM software is removed and the host device (200) is requested to transmit a new version of DRM software.

18. The method of claim 15, wherein, if the DRM software corresponding to the contents decryption request of the host device is not stored, the host device (200) is requested to transmit the DRM software.

19. The method of claim 17 or 18, wherein, when the DRM software is received from the host device (200) in response to the request for the transmission of the DRM software, the DRM software is stored.

20. The method of claim 15, further comprising, the decrypted contents are re-encrypted in the DRM card using session key shared with the host device before transmission to the host device.

21. A contents decryption method comprising:
a host device (200) performing a mutual authentication with a DRM card (100) storing DRM software and connected to the host device (200);
the host device (200) transferring encrypted contents information to the DRM card (100) and requesting decryption of the encrypted contents;
if a grant for the decryption request is received from the DRM card (100), the host device (200) transmitting the encrypted contents; and
the host device (200) receiving decrypted contents from the DRM card (100).

22. The method of claim 21, further comprising: when re-encrypted contents are received from the DRM card (100), decrypting the re-encrypted contents.

23. The method of claim 21 or 22, further comprising: when information is received from the DRM card (100) that DRM software capable of decrypting the encrypted contents is not stored in the DRM card (100), DRM software downloaded externally by the host device (200) is transmitted to the DRM card (100).

24. A contents decryption system comprising:
a DRM card (100) which stores DRM software, executes DRM software corresponding to a request for decrypting received encrypted contents, and decrypts the received encrypted contents; and
a host device (200) connected to the DRM card (100), which requests the DRM card (100) to decrypt the encrypted contents, transmits the encrypted contents, and receives decrypted contents from the DRM card (100).

25. The system of claim 24, wherein, when information is received from the DRM card (100) that DRM software capable of decrypting the encrypted contents is not stored in the DRM card (100), the externally downloaded DRM software is transmitted to the DRM card (100).

26. A computer readable recording medium storing a program for executing a method of decrypting contents received from a host device (200) connected with a DRM card (100) storing DRM software, the method comprising:
receiving encrypted contents information from the host device and granting a contents decryption request;
executing the DRM software corresponding to the contents information and decrypting the received contents; and
transmitting the decrypted contents to the host device (200).

27. A computer readable recording medium storing a program for executing a contents decryption method comprising:
a host device (200) performing a mutual authentication with a DRM card (100) storing DRM software and connected to the host device (200);
transferring encrypted contents information to the DRM card (100) and requesting decryption of the encrypted contents;
if a grant for the decryption request is received from the DRM card (100), transmitting the encrypted contents; and
receiving decrypted contents from the DRM card (100).
